# EUROPÄISCHE PATENTSCHRIFT

(11) **EP 0 943 385 B1**
(45) Veröffentlichungstag und Bekanntmachung des Hinweises auf die Patenterteilung: **31.07.2002**
(21) Anmeldenummer: 99105302.6
(22) Anmeldetag: 15.03.1999
(51) Int. Cl.: B23B 31/26

(54) **Spannvorrichtung für Werkzeugspindel**
Clamping device for tool spindle
Dispositif de serrage pour broche porte-outil

(30) Priorität: 18.03.1998 CH 65298
(43) Veröffentlichungstag der Anmeldung: 22.09.1999
(73) Patentinhaber: C.R.I.D. S.A. Compagnie de Recherches Industrielles et Développements, 1847 Rennaz/VD (CH)
(72) Erfinder: Zosi, Michel, 1847 Rennaz (CH)
(74) Vertreter: Frei, Alexandra Sarah

(56) Entgegenhaltungen:
- US-A- 3 242 819
- US-A- 3 323 419
- US-A- 4 735 532

## Beschreibung

Die Erfindung liegt auf dem Gebiete der Werkzeugmaschinen und betrifft eine Spannvorrichtung für eine Werkzeugspindel nach dem Oberbegriff des unabhängigen Patentanspruchs.

Spannvorrichtungen für Werkzeugspindeln, die in Werkzeugmaschinen zur Anwendung kommen, dienen zum Einspannen eines Werkzeuges. Sie bestehen üblicherweise aus einer rohrförmigen Hülse und einer in der Hülse axial beschränkt beweglichen Zugstange. Die Hülse weist einen sich gegen ihr distales Ende erweiternden Innenkonus auf, der auf einen entsprechenden Konus an den mit der Spindel zu verwendenden Werkzeugen abgestimmt ist (z.B. genormte ISO- oder HSK-Schnittstelle). Zur Befestigung eines Werkzeuges an der Spindel wird das Werkzeug mit Hilfe eines Werkzeughalters an der Zugstange angekoppelt und wird die Zugstange mit einer Zugkraft gegen das proximale Ende der Hülse gezogen. Dadurch wird der Werkzeugkonus in den Innenkonus der Hülse gezogen und in diesen hineingepresst. Der zwischen dem Werkzeugkonus und dem Innenkonus entstehende Reibschluss versteift die Einheit Spindel/Werkzeug und nimmt im wesentlichen ein im Betrieb auf das Werkzeug wirkendes Drehmoment auf.

Die Hülse ist im Spindelgehäuse drehbar gelagert und trägt beispielsweise direkt den Rotor eines Elektromotors, mit dessen Hilfe die Spannvorrichtung und ein daran befestigtes Werkzeug angetrieben werden.

Die für die Verspannung des Werkzeuges in der Spannvorrichtung notwendige Einzugskraft wird üblicherweise durch ein Federpaket erzeugt, das vorgespannt zwischen Hülse und Zugstange angeordnet ist. Für die Entfernung des Werkzeuges wird mit einem am proximalen Ende der Zugstange angreifenden, meist hydraulisch betätigten Kolben die Zugstange gegen die Federkraft des Federpaketes gegen das distale Hülsenende verschoben. Dadurch wird der Werkzeugkonus aus dem Innenkonus der Hülse geschoben und die Verbindung zwischen Werkzeug und Zugstange gelöst, sodass das Werkzeug entfernt werden kann.

Wie bereits erwähnt, wird das Drehmoment, das bei einem Arbeitsvorgang auf das Werkzeug einer Werkzeugmaschine wirken kann, durch die Verbindung zwischen Spannvorrichtung und Werkzeug aufgenommen und gegen oben begrenzt, bei einer Verbindung via Konus/Innenkonus insbesondere durch die Zugkraft, die auf die Zugstange ausgeübt wird. Bei höheren Leistungen und höheren Drehzahlen entstehen üblicherweise höhere Drehmomente, sodass es in vielen Fällen wünschenswert wäre die Zugkraft erhöhen zu können. Da die Zugkraft auch einen Einfluss auf die statische und dynamische Steifigkeit der Einheit bestehend aus Werkzeug und Spannvorrichtung hat und dadurch auch die erreichbare Bearbeitungspräzision beeinflusst, wäre es auch in diesem Zusammenhang vielfach wünschendwert, die Zugkraft erhöhen zu können.

Die Zugkraft hängt primär von der Federcharakteristik (Federkonstante) des genannten, zwischen Hülse und Zugstange wirkenden Federpaketes ab, das üblicherweise aus einer Mehrzahl von Tellerfedern besteht. Es zeigt sich nun, dass es nicht einfach ist, die Federcharakteristik dieses Federpaketes für eine bedeutende Erhöhung der Zugkraft entsprechend zu ändern. Der Grund dafür sind die geometrischen Bedingungen, die im wesentlichen vorgegeben sind, dadurch, dass der Aussendurchmesser der Hülse durch die Lagerung und gegebenenfalls durch einen Motor, dessen Rotor sie bildet, vorgegeben ist.

Die Erfindung stellt sich nun die Aufgabe, eine Spannvorrichtung für eine Werkzeugspindel zu schaffen mit Ausmassen, die im wesentlichen an die Ausmasse üblicher Werkzeugspindeln angepasst sind, wobei die erfindungsgemässe Spannvorrichtung beispielsweise eine genormte Schnittstelle für ein Werkzeug aufweist und in einer Spindel für eine bekannte Werkzeugmaschine einsetzbar ist, wobei aber die Verbindung zwischen der erfindungsgemässen Spannvorrichtung und einem daran befestigten Werkzeug durch eine bedeutend höhere Zugkraft ausgezeichnet sein soll, als dies bei bekannten Spannvorrichtungen der Fall ist.

Diese Aufgabe wird gelöst durch die Spannvorrichtung für eine Werkzeugspindel, wie sie durch den ersten Anspruch definiert ist. Die abhängigen Patentansprüche definieren beispielhafte, vorteilhafte Ausführungsformen der erfindungsgemässen Spannvorrichtung.

Die erfindungsgemässe Spannvorrichtung weist zusätzlich zu einem in der bekannten Weise zwischen Hülse und Zugstange vorgespannt angeordneten Federpaket ein zusätzliches Federpaket auf. Dieses zusätzliche Federpaket ist für den Betrieb zwischen dem proximalen Ende der Zugstange und dem proximalen Ende der Hülse vorgespannt eingekoppelt und wirkt parallel zum ersten Federpaket, wobei es aber den Hauptanteil der Zugkraft liefert. Für das Lösen des Werkzeuges wird das zusätzliche Federpaket zuerst von der Zugstange entkoppelt, wobei die Zugkraft reduziert wird, und dann wird in der bekannten Weise durch Verschieben der Zugstange gegen das distale Ende der Hülse, das heisst durch Komprimieren des ersten Federpaketes, das Werkzeug von der Zugstange abgekoppelt.

Eine erfindungsgemässe Spannvorrichtung mit beispielsweise einer ISO-25-Schnittstelle weist beispielsweise eine Zugkraft in der Grössenordnung von 18'000 bis 20'000 N auf, verglichen mit einer Zugkraft in der Grössenordnung von 3'000 N für eine bekannte Spannvorrichtung mit derselben Schnittstelle.

Ein Ausführungsbeispiel einer erfindungsgemässen Spannvorrichtung für eine Werkzeugspindel soll anhand der folgenden Figuren im Detail beschrieben werden. Dabei zeigen:
- **Figur 1**: einen axialen Schnitt durch eine beispielhafte, schematisch dargestellte Ausführungsform der erfindungsgemässen Spannvorrichtung;
- **Figuren 2 bis 6**: das proximale Ende der Spannvorrichtung gemäss Figur 1 axial geschnitten und in verschiedenen Zuständen zur Erläuterung der Funktionsweise der Spannvorrichtung;
- **Figur 7**: eine beispielhafte Ausführungsform von lösbarer Koppelung und Verriegelung zwischen zusätzlichem Federpaket und Zugstange.

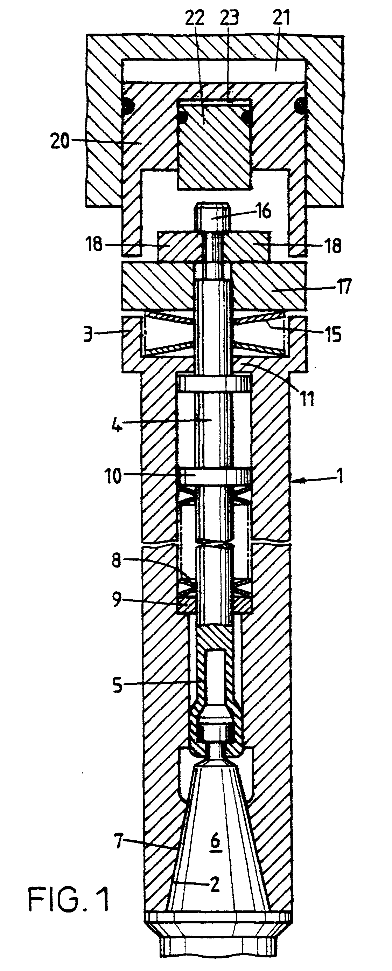

**Figur 1** zeigt einen axialen Schnitt durch eine schematisch dargestellte, beispielhafte Ausführungsform der erfindungsgemässen Spannvorrichtung für eine Werkzeugspindel mit einem gegen unten gerichteten distalen und einem gegen oben gerichteten proximalen Ende. Diese Spannvorrichtung weist eine Hülse 1 auf mit einem Innenkonus 2 an ihrem distalen Ende und einem Hülsenkragen 3 an ihrem proximalen Ende. Die Hülse 1 ist in an sich bekannter und nicht dargestellter Weise in einem Spindelgehäuse gelagert und trägt den Rotor eines Elektromotors oder ist über ein Getriebe mit einem solchen wirkverbunden. Die Spannvorrichtung weist ferner eine Zugstange 4 auf, die in der Hülse 1 koaxial angeordnet ist und die an ihrem distalen Ende einen Werkzeughalter 5 trägt.

Der Werkzeughalter 5 und die innere Oberfläche der Hülse 1 sind derart aufeinander abgestimmt, dass der Werkzeughalter 5 durch axiale Bewegung der Zugstange 4 in der Hülse in eine gespannte, das heisst radial komprimierte, und in eine entspannte Stellung bringbar ist. In der gespannten Stellung, die in der Figur 1 dargestellt ist, schliesst sich der Werkzeughalter 5 formschlüssig oder reibschlüssig um das proximale Ende eines an der Zugstange 4 zu befestigenden Werkzeuges 6; in der entspannten Stellung kann das Werkzeug 6 in den Werkzeughalter 5 eingeführt, bzw. aus diesem entfernt werden. Der Werkzeughalter 5 ist beispielsweise im wesentlichen hohlzylindrisch, hat axiale Schlitze und ist durch axiale Bewegung von einem Hülsenbereich mit einem grösseren Innendurchmesser in einen Hülsenbereich mit einem kleineren Durchmesser von seiner entspannten Stellung in seine gespannte Stellung bringbar.

Das Werkzeug 6 weist einen Konus 7 auf, dessen Form dem Innenkonus 2 der Hülse 1 entspricht. Die Konusform ist dabei üblicherweise genormt (genormte ISO- oder HSK-Schnittstelle). Das mit Hilfe des Werkzeughalters 5 an die Zugstange 4 angekoppelte Werkzeug 6 wird mit Hilfe einer gegen das proximale Ende der Spindel wirkenden Zugkraft in die Hülse 1, beziehungsweise in deren Innenkonus 2 gezogen.

Zwischen der Hülse 1 und der Zugstange 4, beziehungsweise zwischen dem Anschlag 9 der Hülse und dem Anschlag 10 der Zugstange ist ein erstes Federpaket 8 angeordnet. Durch einen am proximalen Ende der Hülse 1 angeordneten Begrenzer 11 wird das erste Federpaket 8 vorgespannt. Der Innenkonus 2 und der Begrenzer 11 sind dabei derart voneinander beabstandet, dass die Zugstange 4 durch ein an der Zugstange 4 angekoppeltes Werkzeug 6 in einer axialen Position gehalten wird, in der das erste Federpaket 8 etwas mehr komprimiert ist als in ihrer durch den Begrenzer 11 definierten Position (ohne Werkzeug).

Das erste Federpaket 8 ist ausgelegt und vorgespannt für eine Zugkraft, die mindestens den Werkzeughalter 5 zu spannen vermag, und für einen Federweg, der mindestens dem axialen Weg (Ausstossweg) zwischen der gespannten und der entspannten Stellung des Werkzeughalters 5 entspricht. Für die oben genannte Spannvorrichtung (ISO-25-Schnittstelle, Ausstossweg ca. 5mm) kommt beispielsweise ein erstes Federpaket 8 zur Anwendung, das aus etwa zwanzig Tellerfedern mit einem Durchmesser von 20mm und mit einer Federkonstante von ca. 4000 N/mm besteht. Diese werden mit ca. 1000 bis 2000 N vorgespannt.

Auf dem Hülsenkragen 3, der vorteilhafterweise einen grösseren Aussendurchmesser aufweist als die Hülse 1, ist das zusätzliche Federpaket 15 positioniert. Dieses zusätzliche Federpaket 15 ist zwischen dem Hülsenkragen 3 und dem proximalen Ende der Zugstange 4, an dem diese beispielsweise einen Kopf 16 aufweist, vorgespannt mit Hilfe eines mehrteiligen Verschlusses 17/18. Das zusätzliche Federpaket 15 hat eine bedeutend höhere Federkonstante als das erste Federpaket 8, das heisst es ist mit einer bedeutend höheren Kraft um einen bedeutend kleineren Federweg komprimierbar.

Für die oben genannte Spannvorrichtung (ISO-25-Schnittstelle) werden als zusätzliches Federpaket 15 beispielsweise drei Tellerfedern mit einem Durchmesser von ca. 40 mm und einer Federkonstante von etwa 120'000 N/mm eingesetzt, die mit einer Kraft von ca. 18'000 bis 20'000 N vorgespannt werden (entsprechender Federweg: 3/6 mm).

Für das Einführen und Ausstossen eines Werkzeuges 6, das heisst für eine axiale Bewegung der Zugstange 4 gegen das distale Ende der Hülse 1 sind zwei Betätigungsmittel vorzusehen, beispielsweise einen ersten hydraulisch betätigten Kolben 20 in einem im Spindelgehäuse befestigten Zylinder 21 zur Komprimierung und dadurch Entkoppelung des zusätzlichen Federpaketes 15 und einen zweiten Kolben 22, der in einem im ersten Kolben 20 angeordneten Zylinder 23 hydraulisch verschiebbar ist. Der Vorteil dieser Anordnung von zwei Kolben 20 und 21 besteht darin, dass für die Komprimierung des zusätzlichen Federpaketes 15 eine grosse Fläche geschaffen wird, welche Fläche es ermöglicht, die für diese Kompression notwendige, hohe Kraft mit einem relativ geringen hydraulischen Druck (ca. 80 bar) aufzubringen.

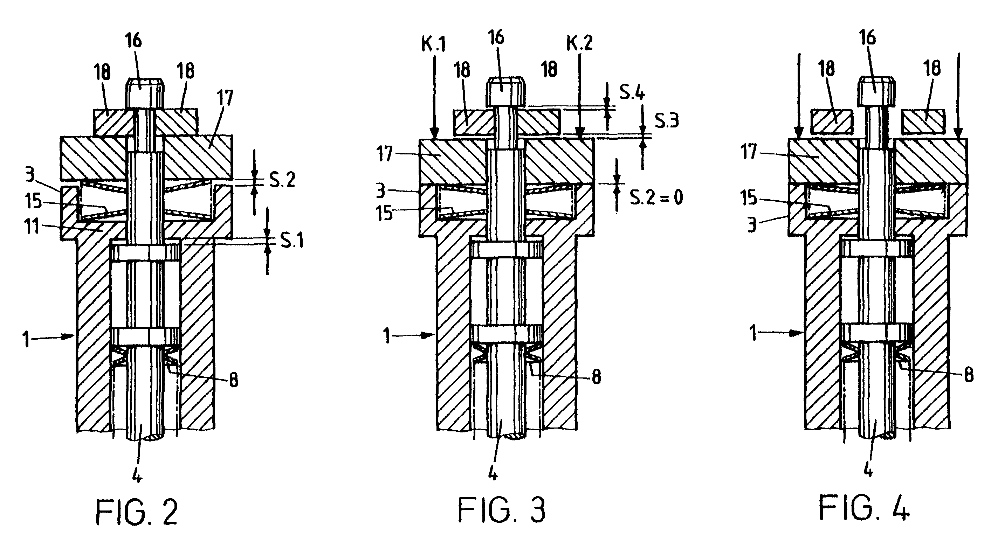

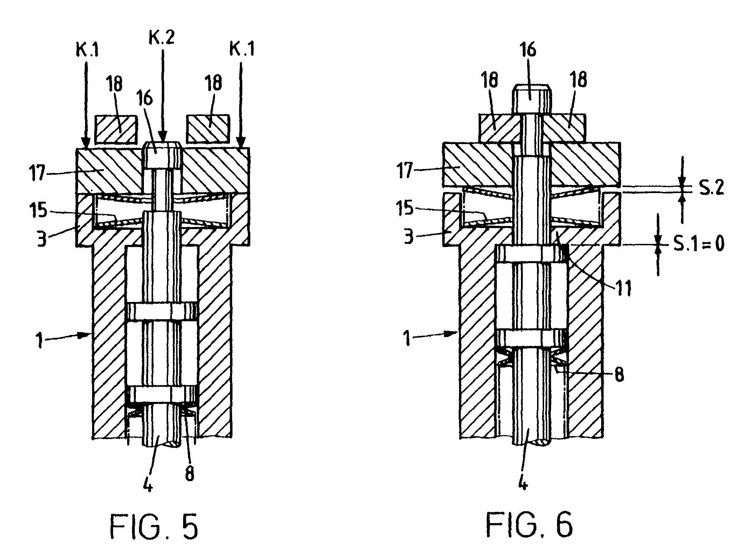

Anhand der **Figuren 2 bis 6** wird nun die Funktion der erfindungsgemässen Spannvorrichtung erläutert. Die Teile der Spannvorrichtung sind mit denselben Bezugsziffern bezeichnet wie in der Figur 1. Die Figuren 2 bis 6 stellen wiederum als axiale Schnitte das proximale Ende der Spannvorrichtung dar und zwar im Betriebszustand mit einem Werkzeug (nicht dargestellt) am distalen Ende der Zugstange 4 (Figur 2), mit von der Zugstange 4 entkoppeltem zusätzlichem Federpaket 15 (Figur 3), mit für ein Ausstossen des Werkzeuges freigegebener Zugstange 4 (Figur 4), mit der Zugstange 4 in Ausstossposition (Figur 5) und in einer Ruheposition mit vorgespannten Federpaketen 15 und 8 aber ohne Werkzeug (Figur 6).

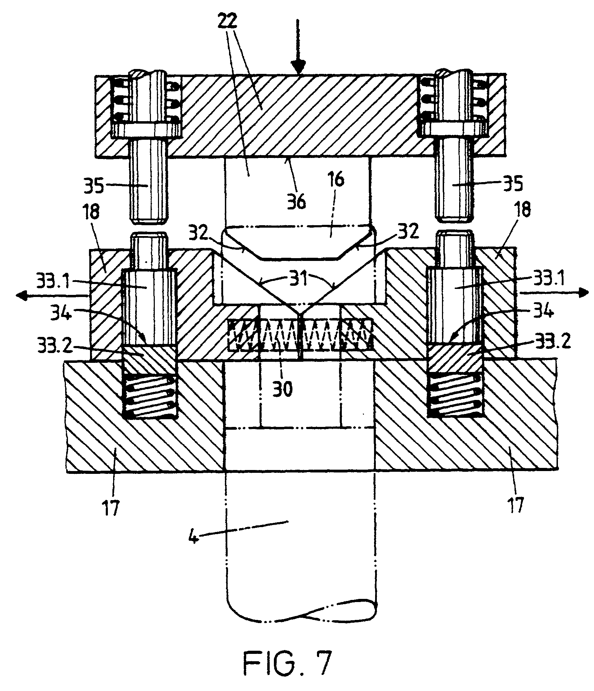

**Figur 2** entspricht im wesentlichen der Figur 1. Die Zugstange 4 wird durch das nicht dargestellte Werkzeug in einer Position gehalten, in der das erste Federpaket 8 vorgespannt ist und die Zugstange 4 nicht am proximalen Begrenzer 11 ansteht (Spiel S.1). Der Verschluss 17/18 zur Koppelung des zusätzlichen Federpaketes 15 mit der Zugstange 4, welcher Verschluss beispielsweise aus einem Verschlussring 17 und zwei radial beweglichen Verschlusselementen 18 (Details siehe Figur 7) besteht, ist derart ausgebildet, dass das zusätzliche Federpaket 15 in gewünschter Weise vorgespannt wird und dass zwischen Hülsenkragen 3 und Verschlussring etwas Spiel vorhanden ist (Spiel S.2).

Die totale Zugkraft, die auf die Zugstange 4 wirkt und damit das nicht dargestellte Werkzeug in den Innenkonus der Hülse presst, ist die Summe der Vorspannung des ersten Federpaketes 8 und des zusätzlichen Federpaketes 15.

**Figur 3** zeigt das proximale Ende der erfindungsgemässen Spannvorrichtung in einem Stadium, in dem das zusätzliche Federpaket 15 von der Zugstange 4 entkoppelt ist. Diese Enkopplung wird bewirkt, durch das erste Betätigungsmittel (Kolben 20, Figur 1), das mit der Kraft K.1 auf den Verschlussring 17 drückt und das Federpaket 15 um höchstens das Spiel S.2 zwischen Hülsenkragen 3 und Verschlussring 17 komprimiert. Durch die Wirkung der Kraft K.1 auf den Verschlussring wird die Vorspannung des zusätzlichen Federpaketes 15 von der Zugstange 4 entkoppelt und werden die Verschlusselemente 18 freigegeben (Spiel S.3 bzw. S.4). Dafür ist nur ein sehr geringer Federweg (Spiel S.2) notwendig, beispielsweise 0,4mm.

**Figur 4** zeigt das proximale Ende der Spannvorrichtung mit geöffnetem Verschluss. Die Verschlusselemente 18 sind radial auseinander bewegt, sodass die Zugstange 4 für eine Entspannung des nicht dargestellten Werkzeughalters, das heisst für das Ausstossen des Werkzeuges, axial gegen das distale Ende der Hülse 1 bewegt werden kann. Für die radiale Bewegung der Verschlusselemente 18 ist ein Betätigungsmittel vorzusehen. Dieses kann beispielsweise dasselbe sein, mit dem die Zugstange axial bewegt wird (siehe Figur 7).

**Figur 5** zeigt das proximale Ende der Spannvorrichtung mit der Zugstange 4 in Ausstossposition. Um die Zugstange in diese Position zu bringen und in dieser Position zu halten, ist eine Kraft K.2 notwendig, die auf das proximale Ende der Zugstange 4 wirkt und mit der das erste Federpaket 8 entsprechend zu komprimieren ist. Diese Kraft K.2 wird mit einem zweiten Betätigungsmittel, beispielsweise mit der Zylinder/Kolbeneinheit 22/23 (Figur 1) bewirkt.

Figur 6 zeigt das proximale Ende der Spannvorrichtung in einem Ruhezustand, das heisst ohne Werkzeug und ohne Wirkung der Betätigungsmittel. Das heisst mit anderen Worten, das erste Federpaket 8 ist in einem vorgespannten Zustand, in dem es die Zugstange 4 gegen den proximalen Begrenzer 11 presst (Spiel S.1 = 0) und das zusätzliche Federpaket 15 ist mittels Verschluss 17/18 ebenfalls vorgespannt zwischen dem Hülsenkragen 3 und dem Kopf 16 der Zugstange 4.

Zum Einführen eines Werkzeuges in die Spannvorrichtung, die sich in ihrem Ruhezustand (Figur 6) befindet, oder zum Ausstossen eines Werkzeuges aus der Spannvorrichtung (Ausgangszustand Figur 2), sind die folgenden Schritte notwendig:
- zusätzliches Federpaket zusätzlich zu seiner Vorspannung komprimieren und von Zugstange entkoppeln;
- Verschluss öffnen;
- erstes Federpaket zusätzlich zu seiner Vorspannung komprimieren und Zugstange in Ausstossposition bringen;
- Werkzeug einstecken bzw. entfernen;
- erstes Federpaket entlasten, wobei die Zugstange in ihre Betriebsposition geschoben wird und das erste Federpaket seinen vorgespannten Zustand annimmt;
- Verschluss schliessen;
- zusätzliches Federpaket entlasten, wobei es mit der Zugstange gekoppelt wird und seinen vorgespannten Zustand annimmt.

**Figur 7** zeigt noch eine bevorzugte Ausführungsform für einen Verschluss für die erfindungsgemässe Spannvorrichtung.

Der Verschluss besteht im wesentlichen, wie bereits in den Figuren 1 bis 6 dargestellt aus einem Verschlussring 17 und zwei axial beweglichen Verschlusselementen 18. Es könnten auch mehr als zwei, regelmässig um die Zugstange 4 angeordnete Verschlusselemente vorgesehen werden. Die Verschlusselemente 18 haben eine radial innere Position (wie in der Figur 7 dargestellt), in der sie den Kopf 16 der Zugstange 4 unterfahren (Verschluss geschlossen) und eine radial äussere Position, in der sie den Kopf 16 freigeben (Verschluss offen). Die Verschlusselemente werden durch ein geeignetes Mittel, beispielsweise durch Rückstellfedern 30 in der radial inneren Position gehalten und aus der radial äusseren Position in die innere zurückgetrieben. Die Verschlusselemente 18 weisen ferner je zwei gegen innen abfallende Steuerflächen auf, die seitlich vom Kopf 16 angeordnet sind und die mit entsprechenden Steuerflächen 32 am Kolben 22 zusammenwirken.

Ferner weisen die Verschlusselemente vorzugsweise Verriegelungsmittel auf, mit deren Hilfe sie in ihrer inneren Position verriegelt werden, um durch eine im Betrieb hohe Zentrifugalkraft nicht gegen die Kraft der Rückstellfedern 30 in ihre äussere Position getrieben zu werden. Die Verriegelungsmittel 33 sind beispielsweise gefedert im Verschlussring 17 gelagerte, zweiteilige Verriegelungsstifte 33.1/2. Die Scherfläche 34 der Verriegelungsstifte 33.1/2 ist ohne äussere Einwirkung auf die Stifte gegenüber der Trennfläche zwischen dem Verschlussring 17 und den Verschlusselementen 18 verschoben, wodurch eine radiale Verschiebung der Verschlusselemente 18 blockiert ist. Die Verriegelungsstifte 33.1/2 werden betätigt durch entsprechende Steuerstifte 35 am Kolben 22. Diese sind derart am Kolben 22 angeordnet, dass sie, wenn der Kolben gegen die Zugstange bewegt wird, auf die Verriegelungsstifte 33.1/2 drücken, wodurch deren Scherfläche auf die Trennfläche zwischen Verschlussring 17 und Verschlusselementen 18 ausgerichtet wird, sodass die radiale Bewegung der Verschlusselemente möglich wird.

Anstelle von einzelnen zweiteiligen Verriegelungsstiften 33.1/2 können auch sich senkrecht zur Papierebene der Figur 7 erstreckende Verriegelungskörper (33.2), die je mit beispielsweise zwei Verriegelungsstiften (33.1) zusammenwirken, zur Anwendung kommen.

Eine mit dem Kopf der Zugstange 4 zusammenwirkende Stirnfläche 36 des Kolbens 22, die Steuerflächen 32 zur radialen Bewegung der Verschlusselemente 18 und die Steuerstifte 35 zur Entriegelung der Verschlusselemente 18 sind derart am Kolben 22 anzuordnen, dass bei einer Bewegung des Kolbens 22 gegen das proximale Ende der Hülse 1 zuerst die Verschlusselemente 18 entriegelt und dann auseinander bewegt werden und dass erst dann die Zugstange 4 in axialer Richtung bewegt wird.

Durch eine derartige Anordnung sind die Betätigung der Verriegelungsmittel 33, der Verschlusselemente 18 und der Zugstange 4 zwangsgesteuert miteinander verbunden.

## Patentansprüche

1. Spannvorrichtung für Werkzeugspindel, welche Spannvorrichtung eine Hülse (1) und eine in der Hülse (1) axial bewegliche Zugstange (4) aufweist, wobei die Hülse (1) an ihrem distalen Ende einen Innenkonus (2) zur Aufnahme eines Konus (7) eines Werkzeuges (6) aufweist, wobei die Zugstange (4) an ihrem distalen Ende einen Werkzeughalter (5) aufweist, der durch axiale Bewegung der Zugstange (4) in der Hülse (1) in eine gespannte und eine nicht gespannte Stellung bringbar ist, wobei zwischen Hülse (1) und Zugstange (4) zur Erzeugung einer Zugkraft auf die Zugstange (4) ein erstes, vorgespanntes Federpaket (8) angeordnet ist, das die Zugstange (4) gegen das proximale Ende der Hülse (4) und den Werkzeughalter (5) in seine gespannte Stellung treibt, und wobei am proximalen Ende der Spannvorrichtung ein Betätigungsmittel (22/23) vorgesehen ist, mit dessen Hilfe die Zugstange (4) gegen die Federkraft des ersten Federpaketes (8) gegen das distale Ende der Hülse (1) verschiebbar ist, **dadurch gekennzeichnet, dass** die Spannvorrichtung zur Erhöhung der Zugkraft auf die Zugstange (4) ein zusätzliches Federpaket (15) aufweist, das vorgespannt zwischen dem proximalen Ende der Hülse (1) und dem proximalen Ende der Zugstange (4) einkoppelbar ist, und dass zur Entkopplung des zusätzlichen Federpaketes (15) von der Zugstange (4) ein weiteres Betätigungsmittel (20/21) vorgesehen ist.

2. Spannvorrichtung nach Anspruch 1, **dadurch gekennzeichnet, dass** das zusätzliche Federpaket (15) eine bedeutend höhere Federkonstante hat als das erste Federpaket (8).

3. Spannvorrichtung nach einem der Ansprüche 1 oder 2, **dadurch gekennzeichnet, dass** zur Koppelung des zusätzlichen Federpaketes (15) an das proximale Ende der Zugstange (4) ein Verschluss (18/19) vorgesehen ist und dass das Betätigungsmittel (22/23) mit Mitteln (32, 35) zur Öffnung des Verschlusses vor der Verschiebung der Zugstange (4) ausgerüstet ist.

4. Spannvorrichtung nach einem der Ansprüche 1 bis 3, **dadurch gekennzeichnet, dass** das weitere Betätigungsmittel ein in einem Zylinder (21) bewegbarer Kolben (20) ist und dass das Betätigungsmittel ebenfalls ein in einem Zylinder (23) bewegbarer Kolben (22) ist, wobei der Zylinder (23) des Betätigungsmittels im Kolben (20) des weiteren Betätigungsmittels angeordnet ist.

5. Spannvorrichtung nach einem der Ansprüche 1 bis 4, **dadurch gekennzeichnet, dass** das zusätzliche Federpaket (15) auf einem am proximalen Ende der Hülse (1) angeordneten Hülsenkragen (3) angeordnet ist und dass der Hülsenkragen (3) einen grösseren Innendurchmesser aufweist als die Hülse (1).

6. Spannvorrichtung nach Anspruch 5, **dadurch gekennzeichnet, dass** das zusätzliche Federpaket (15) aus einer Mehrzahl von Tellerfedern besteht.

7. Spannvorrichtung nach einem der Ansprüche 3 bis 6, **dadurch gekennzeichnet, dass** der Verschluss zur Koppelung des zusätzlichen Federpaketes (15) an die Zugstange (4) einen Verschlussring (17) und eine Mehrzahl von radial beweglichen Verschlusselementen (18) aufweist, wobei die Verschlusselemente (18) mit einem am proximalen Ende der Zugstange (4) angeordneten Kopf (16) zusammenwirken.

8. Spannvorrichtung nach Anspruch 7, **dadurch gekennzeichnet, dass** zum Verschieben der radial beweglichen Verschlusselemente (18) von einer radial inneren in eine radial äussere Position am Betätigungsmittel (22/23) Steuerflächen (32) vorgesehen sind und dass zum Rückstellen der Verschlusselemente (18) in ihre radial innere Position ein Rückstellmittel vorgesehen ist.

9. Spannvorrichtung nach Anspruch 8, **dadurch gekennzeichnet, dass** als Rückstellmittel Rückstellfedern (30) vorgesehen sind.

10. Spannvorrichtung nach Anspruch 8 oder 9, **dadurch gekennzeichnet, dass** der Verschluss Verriegelungsmittel aufweist, mit denen die radial beweglichen Verschlusselemente (18) in der inneren radialen Position verriegelbar sind.

11. Spannvorrichtung nach Anspruch 10, **dadurch gekennzeichnet, dass** als Verriegelungsmittel Verriegelungsstifte (33.1) und Verriegelungskörper (33/2) vorgesehen sind, die zusammen eine verschiebbare Scherfläche (34) bilden.

12. Spannvorrichtung nach Anspruch 10 oder 11, **dadurch gekennzeichnet, dass** am Betätigungsmittel Steuermittel (35) zur Steuerung der Verriegelungsmittel vorgesehen sind.

## Claims

1. Clamping device for tool spindles, said clamping device having a sleeve (1) and a draw rod (4) axially movable in the sleeve (1), which has at its distal end an internal cone (2) for receiving a cone (7) of a tool (6), the draw rod (4) having at its distal end a tool holder (5), which can be brought by the axial movement of the draw rod 4 in the sleeve 1 into a clamped and an unclamped position, a first, pretensioned spring assembly (8) being positioned between sleeve (1) and draw rod (4) for producing a tensile force on draw rod (4) and drives the latter towards the proximal end of the sleeve (4) and the tool holder (5) into its clamped position and at the proximal end of the clamping device is provided an actuating means (22/23) with the aid of which the draw rod (4) can be displaced towards the distal end of the sleeve (1) counter to the spring tension of the first spring assembly (8), **characterized in that**, for increasing the tensile force on the draw rod (4), the clamping device has an additional spring assembly (15), which can be coupled in pretensioned manner between the proximal end of the sleeve (1) and the proximal end of the draw rod (4) and that for uncoupling the additional spring assembly (15) from the draw rod (4) a further actuating means (20/21) is provided.

2. Clamping device according to claim 1, **characterized in that** the additional spring assembly (15) has a much higher spring constant than the first spring assembly (8).

3. Clamping device according to one of the claims 1 or 2, **characterized in that** for the coupling of the additional spring assembly (15) on the proximal end of the draw rod (4) is provided a fastener (18/19) and that the actuating means (22/23) is equipped with means (32, 35) for opening the fastener prior to the displacement of the draw rod (4).

4. Clamping device according to one of the claims 1 to 3, **characterized in that** the further actuating means is constituted by a piston (20) movable in a cylinder (21) and that the actuating means is also a piston (22) movable in a cylinder (23), the cylinder (23) of the actuating means being located in the piston (20) of the further actuating means.

5. Clamping device according to one of the claims 1 to 4, **characterized in that** the additional spring assembly (15) is located on a sleeve collar (3) located at the proximal end of the sleeve (1) and that the sleeve collar (3) has a larger internal diameter than the sleeve (1).

6. Clamping device according to claim 5, **characterized in that** the additional spring assembly (15) comprises a plurality of disk springs.

7. Clamping device according to one of the claims 3 to 6, **characterized in that** the fastener for coupling the additional spring assembly (15) to the draw rod (4) has a fastening ring (17) and a plurality of radially movable fastening elements (18), the latter cooperating with a head (16) positioned at the proximal end of the draw rod (4).

8. Clamping device according to claim 7, **characterized in that** for the displacement of the radially movable fastening elements (18) from a radial inner into a radial outer position on the actuating means (22/23) are provided control surfaces (32) and that a restoring means is provided for restoring the fastening elements (18) to their radial inner position.

9. Clamping device according to claim 8, **characterized in that** restoring springs (30) are provided as restoring means.

10. Clamping device according to claim 8 or 9, **characterized in that** the fastener has locking means with which the radially movable fastening elements (18) can be locked in the inner radial position.

11. Clamping device according to claim 10, **characterized in that** the locking means are constituted by locking pins (33.1) and locking bodies (33/2), which together form a displaceable plane of shear (34).

12. Clamping device according to claim 10 or 11, **characterized in that** on the actuating means are provided control means (35) for controlling the locking means.

## Revendications

1. Dispositif de serrage pour broches d'outil, lequel dispositif de serrage présente un manchon (1) et une tringle de traction (4) apte à se déplacer axialement dans le manchon (1), le manchon (1) présentant à son extrémité distale un cône intérieur (2) pour la réception du cône (7) d'un outil (6), la tringle de traction (4) présentant à son extrémité distale un support d'outil (5) qui, par déplacement axial de la tringle de traction (4) dans le manchon (1), peut être amené dans une position serrée et dans une position non serrée, un premier empilement de ressorts précontraints (8) qui sollicite la tringle de traction (4) contre l'extrémité proximale du manchon (4) et le support d'outil (5) dans sa position serrée étant disposé entre le manchon (1) et la tringle de traction (4) pour créer une force de traction sur la tringle de traction (4), et un moyen d'actionnement (22/23) à l'aide duquel la tringle de traction (4) peut être déplacée contre l'extrémité distale du manchon (1) en opposition à la force élastique du premier empilement de ressorts (8) étant prévu à l'extrémité proximale du dispositif de serrage, **caractérisé en ce que** pour augmenter la force de traction sur la tringle de traction (4), le dispositif de serrage présente un empilement supplémentaire de ressorts (15) qui peut être accouplé sous précontrainte entre l'extrémité proximale du manchon (1) et l'extrémité proximale de la tringle de traction (4), et **en ce qu'**un autre moyen d'actionnement (20/21) est prévu pour le désaccouplement de l'empilement supplémentaire de ressorts (15) par rapport à la tringle de traction (4).

2. Dispositif de serrage selon la revendication 1, **caractérisé en ce que** l'empilement supplémentaire de ressorts (15) présente une constante de ressort nettement plus élevée que celle du premier empilement de ressorts (8).

3. Dispositif de serrage selon l'une des revendications 1 ou 2, **caractérisé en ce qu'**une fermeture (18/19) est prévue pour l'accouplement de l'empilement supplémentaire de ressorts (15) à l'extrémité proximale de la tringle de traction (4) et **en ce que** le moyen d'actionnement (22/23) est équipé de moyens (32, 35) pour l'ouverture et la fermeture avant le déplacement de la tringle de traction (4).

4. Dispositif de serrage selon l'une des revendications 1 à 3, **caractérisé en ce que** l'autre moyen d'actionnement est un piston (20) qui peut être déplacé dans un cylindre (21) et **en ce que** le moyen d'actionnement est également un piston (22) qui peut être déplacé dans un cylindre (23), le cylindre (23) du moyen d'actionnement étant disposé dans le piston (20) de l'autre moyen d'actionnement.

5. Dispositif de serrage selon l'une des revendications 1 à 4, **caractérisé en ce que** l'empilement supplémentaire de ressorts (15) est disposé sur un collet de manchon (3) disposé à l'extrémité proximale du manchon (1) et **en ce que** le diamètre intérieur du collet de manchon (3) est plus grand que celui du manchon (1).

6. Dispositif de serrage selon la revendication 5, **caractérisé en ce que** l'empilement supplémentaire de ressorts (15) est constitué d'une pluralité de ressorts en plateau.

7. Dispositif de serrage selon l'une des revendications 3 à 6, **caractérisé en ce que** la fermeture en vue de l'accouplement de l'empilement supplémentaire de ressorts (15) à la tringle de traction (4) présente une bague de fermeture (17) et une pluralité d'éléments de fermeture (18) mobiles radialement, les éléments de fermeture (18) coopérant avec une tête (16) disposée sur l'extrémité proximale de la tringle de traction (4).

8. Dispositif de serrage selon la revendication 7, **caractérisé en ce que** des surfaces de guidage (32) sont prévues sur l'élément d'actionnement (22/23) pour déplacer les éléments de fermeture (18) mobiles radialement depuis une position située radialement à l'intérieur jusque dans une position située radialement à l'extérieur et **en ce qu'**un moyen de rappel est prévu pour ramener les éléments de fermeture (18) dans leur position située radialement à l'intérieur.

9. Dispositif de serrage selon la revendication 8, **caractérisé en ce que** des ressorts de rappel (30) sont prévus comme moyens de rappel.

10. Dispositif de serrage selon la revendication 8 ou 9, **caractérisé en ce que** la fermeture présente des moyens de verrouillage par lesquels les éléments de fermeture (18) mobiles radialement peuvent être verrouillés dans la position située radialement à l'intérieur.

11. Dispositif de serrage selon la revendication 10, **caractérisé en ce que** des tiges de verrouillage (33.1) et des corps de verrouillage (33/2) sont prévus comme moyens de verrouillage et forment ensemble une surface coulissante de cisaillement (34).

12. Dispositif de serrage selon la revendication 10 ou 11, **caractérisé en ce que** des moyens de commande (35) pour la commande des moyens de verrouillage sont prévus sur le moyen d'actionnement.
